# EUROPEAN PATENT APPLICATION

(11) **EP 3 376 219 A1**
(43) Date of publication of application: **19.09.2018**
(21) Application number: 16897012.7
(22) Date of filing: 04.10.2016
(51) Int. Cl.: G01N 29/28, G01N 29/04

(54) **NONDESTRUCTIVE INSPECTION METHOD AND COUPLING MEDIUM PRESSING JIG**

(30) Priority: 31.03.2016 JP 2016073187
(71) Applicant: IHI Corporation, Tokyo 135-8710 (JP)
(72) Inventor: HASHIMOTO Shuhei, Tokyo 135-8710 (JP); YAMAGUCHI Yuichi, Tokyo 135-8710 (JP)
(74) Representative: MERH-IP Matias Erny Reichl Hoffmann Patentanwälte PartG mbB
(86) International application number: PCT/JP2016/079458
(87) International publication number: WO 2017/168795

(57) **Abstract**

A nondestructive inspection method of the present disclosure is a nondestructive inspection method in which a contact medium 10 is attached to an inspection object 1, a nondestructive inspection of this inspection object 1 is performed using an ultrasonic probe via the contact medium 10, a polymer gel in which high polymers are cross-linked is used as the contact medium 10, and after the contact medium 10 has been attached to the inspection object 1, and before the nondestructive inspection is performed, the contact medium 10 is pressed against the inspection object 1.

## Description

### Technical Field

The present disclosure relates to a nondestructive inspection method and a contact medium pressing jig.

Priority is claimed on Japanese Patent Application No. 2016-073187, filed March 31, 2016, the content of which is incorporated herein by reference.

### Background Art

An inspection method for human bodies and the like in which anatomical measurements and functions of body tissue, organs and the like are inspected using reflection characteristics and acoustic characteristics of the body tissue obtained using ultrasonic pulse reflection waves is disclosed in Patent Document 1 as a nondestructive inspection method. In this inspection method, because it is necessary to hold an ultrasonic oscillator firmly in contact with the surface of the inspected part of the patient, a contact medium is attached to the surface of the inspected part of the patient, and the ultrasonic oscillator is then placed in contact with the surface of the inspected part via the contact medium. In Patent Document 1, guar gum gel is used as the contact medium.

### Document of Related Art

### Patent Document

[Patent Document 1] Japanese Unexamined Patent Application, First Publication No. S56-005647

### Summary of the Invention

### Technical Problem

In recent years, in order to achieve a reduction in the weight of jet engines, composite materials such as carbon fiber reinforced plastics (CFRP) are used, and fan cases are formed by laminating layers of such composite materials.

A honeycomb structural body that secures mechanical strength and also serves as a buffer material in the event of a collision with an object is provided on an inner side of the fan case. In this structure, when bird strike or the like occurs, it is necessary to remove a portion of the honeycomb structural body that has been deformed by the bird strike, and to perform a nondestructive inspection as to whether or not any separation or the like has occurred between the layers of composite material.

In the related art described in Patent Document 1, an inspection object is a simple structural body, such as a surface of a human body, which is more or less flat. Accordingly, when the inspection object is a structural body having a complex shape, such as a fan case having a honeycomb structural body provided on the inner side thereof, it is difficult, if a contact medium is simply attached onto the surface of the inspection object, to ensure that the space is properly filled with this contact medium, and there is a possibility that this will affect the quality of a defect inspection performed using ultrasonic waves. Because of this, conventionally, it has been necessary to perform a large-scale inspection by removing the jet engine from the plane at an airport or the like, and then dismantling the fan case.

The present disclosure was conceived in view of the above-described problems points, and it is an object thereof to provide a nondestructive inspection method that can inspect an inspection object on site (i.e., on-wing) easily even when the inspection object has a complex shape, and a coupling medium pressing jig that is suitable for this method.

### Solution to Problem

A nondestructive inspection method according to an aspect of the present disclosure is a nondestructive inspection method in which a contact medium is attached to an inspection object, a nondestructive inspection of the inspection object is performed using an ultrasonic probe via the contact medium, a polymer gel in which high polymers are cross-linked is used as the contact medium, and after the contact medium has been attached to the inspection object, and before the nondestructive inspection is performed, the contact medium is pressed against the inspection object.

Furthermore, a contact medium pressing jig according to an aspect of the present disclosure is a contact medium pressing jig that presses a contact medium against an inspection object, and is provided with a pressing surface that is parallel to a surface of the inspection object.

### Effects of the Invention

In the present disclosure, a polymer gel is used as the contact medium, and the contact medium is pressed against the inspection object before the nondestructive inspection using the ultrasonic probe is performed. As a result, the contact medium that is formed by the polymer gel can be deformed so as to match the complex shape of the inspection object, and can be spread to all corners of a space, so that the contact medium is able to properly fill the space entirely. Because the polymer gel is deformed flexibly in accordance with the shape of the inspection object, work efficiency when filling the space with the contact medium is improved. Moreover, the thickness of the contact medium is uniformized as a result of the contact medium being pressed so that the quality of a defect inspection performed using an ultrasonic probe can be improved.

Moreover, because the polymer gel has a predetermined viscosity and is able to attach to an object, compared with other contact mediums such as water and oils, drops of polymer gel do not fall down and polymer gel does not contaminate surrounding areas. Moreover, because the polymer gel is a semisolid, it can be easily removed, and can also be reused.

Accordingly, in the present disclosure, even if the inspection object has a complex shape, it is possible to perform an on-site nondestructive inspection easily.

### Brief Description of Drawings

FIG. 1 is a diagram representing a nondestructive inspection method according to an embodiment of the present disclosure.
FIG. 2A is a diagram representing a step in which a contact medium is attached to an inspection object in the nondestructive inspection method according to the embodiment of the present disclosure.
FIG. 2B is a diagram representing a step in which the contact medium is attached to the inspection object in the nondestructive inspection method according to the embodiment of the present disclosure.
FIG. 2C is a diagram representing a step in which the contact medium is attached to the inspection object in the nondestructive inspection method according to the embodiment of the present disclosure.
FIG. 3A is a diagram representing a step in which the contact medium is separated from the inspection object in the nondestructive inspection method according to an embodiment of the present disclosure.
FIG. 3B is a diagram representing a step in which the contact medium is separated from the inspection object in the nondestructive inspection method according to an embodiment of the present disclosure.
FIG. 4 is a structural diagram representing a contact medium pressing jig according to another embodiment of the present disclosure.
FIG. 5 is a structural diagram representing a contact medium pressing jig according to another embodiment of the present disclosure.
FIG. 6A is a structural diagram representing a contact medium pressing jig according to another embodiment of the present disclosure.
FIG. 6B is a structural diagram representing the contact medium pressing jig according to another embodiment of the present disclosure.
FIG. 7A is a structural diagram representing a contact medium pressing jig according to another embodiment of the present disclosure.
FIG. 7B is a structural diagram representing the contact medium pressing jig according to another embodiment of the present disclosure.
FIG. 8 is a plan view representing a contact medium that is attached to an inspection object in the nondestructive inspection method according to another embodiment of the present disclosure.
FIG. 9 is a structural diagram representing a contact medium used in the nondestructive inspection method according to another embodiment of the present disclosure.

### Description of Embodiments

Hereinafter, embodiments of the present disclosure are described with reference to the drawings. Note that in the following description, a fan case of a jet engine is used as an example of an inspection object of the present disclosure, however, the present disclosure may also be applied in the same way to other objects of inspection having a complex shape.

### (Nondestructive inspection method)

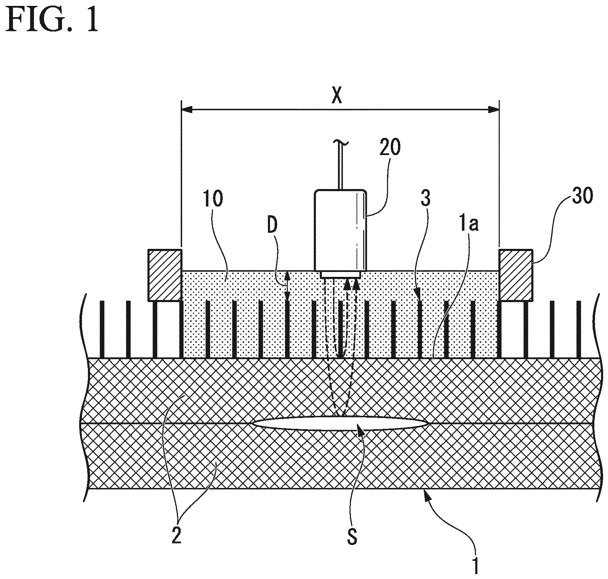

FIG. 1 is a diagram representing a nondestructive inspection method according to an embodiment of the present disclosure.

As is shown in FIG. 1, in the nondestructive inspection method of the present embodiment, a contact medium 10 is attached to an inspection object 1, and a nondestructive inspection of the inspection object 1 is made using an ultrasonic probe 20 via the contact medium 10.

The inspection object 1 of the present embodiment is a fan case of a jet engine, and is formed by laminating a plurality of layers of a composite material 2. The composite material 2 is formed from fiber reinforced plastic (FRP). More specifically, the composite material 2 is formed from carbon fiber reinforced plastic (CFRP) which is manufactured by impregnating a resin material with carbon fibers. The composite material 2 is lightweight compared to a metal material, and has a strength that is not inferior to that of metal. However, because the layers of the composite material 2 are bonded together using resin, if an impact is applied thereto, in some cases interlayer separation S may occur between the layers of the composite material 2.

A honeycomb structural body 3 is provided on a surface 1a of the inspection object 1. The honeycomb structural body 3 is provided on an inner side of the fan case. The honeycomb structural body 3 stands upright to a predetermined height from the surface 1a of the inspection object 1. In addition to securing the mechanical strength of the composite material 2, the honeycomb structural body 3 also serves as a buffer in the event of a collision with an object. For example, if a bird strike occurs, a portion of the honeycomb structural body 3 that has been deformed as a result of this bird strike is removed, and a nondestructive inspection as to whether or not any interlayer separation S has occurred between the layers of composite material 2 is performed. Note that FIG. 1 shows a state in which a portion of the honeycomb structural body 3 has been removed, in other words, a state in which the honeycomb structural body 3 is lower than its original height (i.e., in a range from approximately several mm to several cm from the surface 1a).

One reason for leaving a portion of the honeycomb structural body 3 is that, if the honeycomb structural body 3 is removed completely, there is a deterioration in the mechanical strength of the composite material 2. A further reason is that, by leaving a small portion of the honeycomb structural body 3, when the honeycomb structural body 3 is cut out, any damage to the composite material 2 is prevented. Yet another reason is that, if it is confirmed through the nondestructive inspection that there is no separation S between the layers of the composite material 2, then the portion of the honeycomb structural body 3 that has been cut out is subsequently refilled using a potting material (i.e., a resin material), and it is easy in this case for the potting material to be firmly attached to the honeycomb structural body 3 due to the complex shape of the honeycomb structural body 3.

The contact medium 10 fills a space between the inspection object 1 and the ultrasonic probe 20. The contact medium 10 is attached to the surface 1a of the inspection object 1 to a height (i.e., a thickness) that is greater than the height of the honeycomb structural body 3 by a predetermined distance D. If the ultrasonic probe 20 (a solid object) is placed in contact with the honeycomb structural body 3 (a solid object), in other words, if a solid object and a solid object are in mutual contact, the attenuation rate of the ultrasonic probe shows a marked increase. Accordingly, by making the height of the contact medium 10 greater than the height of the honeycomb structural body 3, the ultrasonic probe 20 can be prevented from coming into contact with the honeycomb structural body 3. The shape of the contact medium 10 located at a higher position than the honeycomb structural body 3 is maintained by a frame body 30 that surrounds the periphery of the contact medium 10. The frame body 30 is formed in a toroidal shape, and surrounds an inspection range X of the inspection object 1. When seen in plan view, the inspection range X may be circular or rectangular or, alternatively, may have another shape (for example, elliptical or polygonal or the like). Note that if a contact medium 10 having high viscosity is used, then the frame body 30 may be omitted.

The contact medium 10 is a polymer gel in which high polymers are cross-linked. By cross-linking to a highly polymerized compound (such as PVA (polyvinyl alcohol) or the like) using borax or the like, the viscosity of the polymer gel is adjusted. The polymer gel is a semisolid and has a suitable viscosity that is not sticky to the touch, while having a cold, moist feel.

A natural polysaccharide such as, for example, gum tragacanth, locust bean gum, sodium alginate, carrageenan, and guar gum and the like may be used as the high polymer compound. Natural polysaccharides have superior acid resistance, salt tolerance, and resistance to chemicals. They are also non-toxic, are low in cost, and are easily obtainable.

The ultrasonic probe 20 performs a nondestructive inspection of the inspection object 1 via the contact medium 10. Specifically, the ultrasonic probe 20 causes ultrasonic waves to be transmitted via the contact medium 10 to the inspection object 1, and then, based on echo signals reflected from the inspection object 1, detects whether or not any defect such as interlayer separation S is present. The contact medium 10 has an effect of mitigating any discontinuity in the acoustic impedance, and ensuring that acoustic waves are efficiently transmitted to the inspection object 1. It has become evident through experiments that this effect is also imparted to the contact medium 10 which is made from polymer gel.

In the nondestructive inspection, a plurality of ultrasonic probes 20 having mutually different frequencies may be used in combination. For example, an interlayer separation S in a shallow location from the surface 1a of the inspection object 1 may be inspected using a high-wavelength (for example, in a range from 5 to 15 MHz) ultrasonic probe 20, and an interlayer separation S in a deep location from the surface 1a of the inspection object 1 may be inspected using a low-wavelength (for example, in a range from 1 to 5 MHz) ultrasonic probe 20. Namely, if the interlayer separation S occurs in a shallow location, the difference between the path of the ultrasonic waves reflected by the interlayer separation S and the path of the ultrasonic waves reflected by the surface 1a is minimal. In this case, it is preferable to raise the resolution by raising the frequency and shortening the wavelength. On the other hand, if the interlayer separation S occurs in a deep location, the path of the ultrasonic waves reflected by the interlayer separation S is longer than the path of the ultrasonic waves reflected by the surface 1a, so that attenuation of the ultrasonic waves may occur. In this case, it is preferable to raise the penetrative force of the ultrasonic waves by lowering the frequency and lengthening the wavelength. By distinguishing between a plurality of ultrasonic probes 20 having mutually different frequencies, a nondestructive inspection can be made irrespective of the location (in the depth direction) of the interlayer separation S as seen from the honeycomb structural body 3 side.

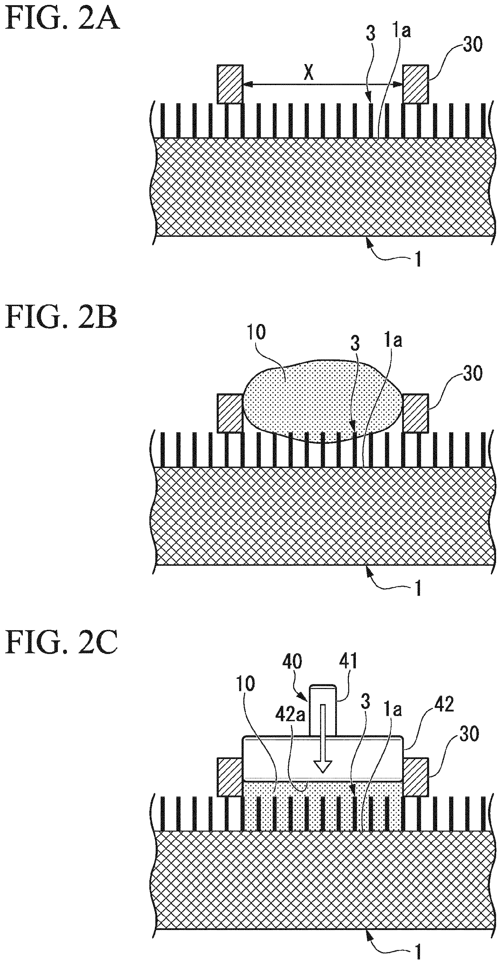

FIG. 2A through FIG. 2C are views representing steps in which the contact medium 10 is attached to the inspection object 1 in the nondestructive inspection method according to the embodiment of the present disclosure.

Firstly, as is shown in FIG. 2A, the frame body 30 is positioned surrounding the inspection range X of the inspection object 1. Next, as is shown in FIG. 2B, an appropriate quantity of the contact medium 10 is placed on the inner side of the frame body 30. Subsequently, as is shown in FIG. 2C, a contact medium pressing jig 40 is inserted on the inner side of the frame body 30, and is made to press the contact medium 10 placed inside the frame body 30 against the inspection object 1.

The contact medium pressing jig 40 is provided with a rod-shaped handle portion 41, and a pressing portion 42 that is provided at a distal end of the handle portion 41. The size of the pressing portion 42 is such that the pressing portion 42 can be inserted inside the frame body 30. The size of the pressing portion 42 of the present embodiment is substantially the same as that of a space on the inner side of the frame body 30. The pressing portion 42 is guided by an inner wall surface of the frame body 30 such that any tilting of the pressing portion 42 is prevented, and, in this state, presses the contact medium 10 against the inspection object 1. The pressing portion 42 is provided with a pressing surface 42a that is parallel with the surface 1a of the inspection object 1. In other words, if the surface 1a of the inspection object 1 is a flat surface, then the pressing surface 42a is also a flat surface. Note that the inspection object 1 of the present embodiment is a cylinder-shaped fan case, however, because the fan case has a large diameter, the surface 1a within the inspection range X can be regarded as a substantially flat surface. However, if the surface 1a is slightly curved, then it is preferable that the pressing surface 42a also be slightly curved so as to match the shape of the surface 1a.

As a result of the pressing performed by the contact medium pressing jig 40, the contact medium 10 is spread to all corners of the honeycomb structural body 3, and, additionally, the height of the contact medium 10 becomes uniform. Once the contact medium 10 has been pressed by the contact medium pressing jig 40 against the inspection object 1, the contact medium pressing jig 40 is lifted up and, as is shown in FIG. 1, the ultrasonic probe 20 is placed in contact with the contact medium 10, and then the inspection of the inspection object 1 is performed. Note that a fluororesin coating or the like may be applied to the pressing surface 42a in order to enable the contact medium pressing jig 40 to be separated easily from the contact medium 10 when the contact medium pressing jig 40 is lifted up.

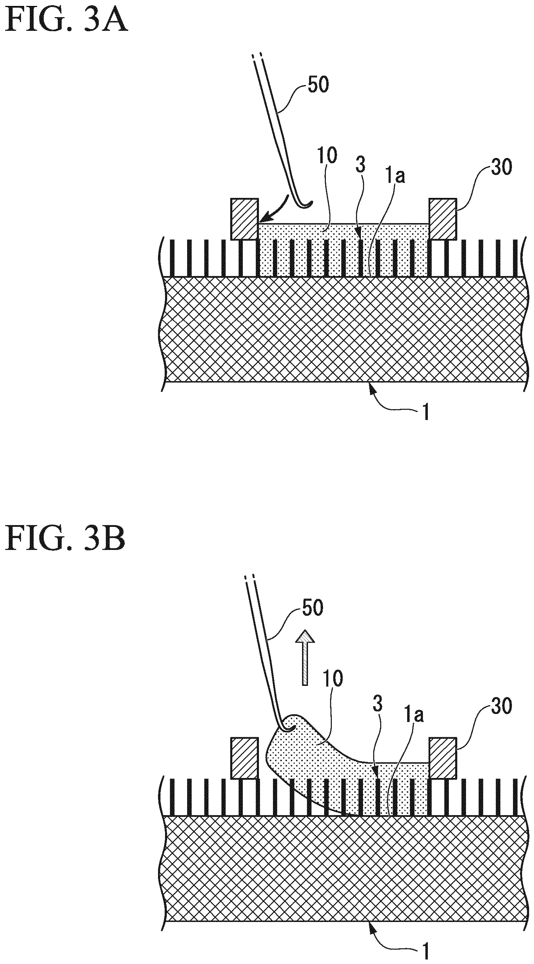

FIG. 3A and FIG. 3B are views representing steps in which the contact medium 10 is separated from the inspection object 1 in the nondestructive inspection method according to the embodiment of the present disclosure.

As is shown in FIG. 3A, once the nondestructive inspection has ended, a contact medium separating jig 50 is inserted along the inner wall surface of the frame body 30 with which the contact medium 10 is in contact. The contact medium separating jig 50 may be formed, for example, in a narrow rod shape having a bent distal end. Next, as is shown in FIG. 3B, by lifting up the contact medium separating jig 50 that has been inserted along the inner circumferential wall of the frame body 30, the contact medium 10 can be easily separated from the honeycomb structural body 3.

In this way, in the present embodiment, a polymer gel is used for the contact medium 10, and the contact medium 10 is pressed against the inspection object 1 prior to the nondestructive inspection using the ultrasonic probe 20 being performed. As a consequence, the contact medium 10 that is formed from a polymer gel can be deformed so as to match the complex shape of the inspection object 1, and can be spread to all corners of a space so that the ability of the contact medium 10 to fill a space is ensured. Because a polymer gel can be flexibly deformed in accordance with the shape of the inspection object 1, work efficiency when filling a space with the contact medium 10 is improved. Additionally, the thickness of the contact medium 10 is uniformized as a result of the contact medium 10 being pressed, and therefore the quality of a defect inspection performed using the ultrasonic probe 20 can be improved. Moreover, because a polymer gel has a predetermined viscosity and is able to attach to an object, compared with other contact mediums such as water and oils, drops of polymer gel do not fall down and therefore polymer gel do not contaminate surrounding areas. Moreover, because the polymer gel is a semisolid, it can be easily removed, and can also be reused.

In the nondestructive inspection method of the present embodiment, the contact medium 10 is attached to the inspection object 1, and a nondestructive inspection of the inspection object 1 is made using the ultrasonic probe 20 via the contact medium 10. In the nondestructive inspection method of the present embodiment, a polymer gel in which high polymers are cross-linked is used as the contact medium 10, and after the contact medium 10 has been attached to the inspection object 1, and before the nondestructive inspection is performed, the contact medium 10 is pressed against the inspection object 1. By employing the above-described method, the inspection object 1 can be inspected easily on site (i.e., on-wing) even when the inspection object 1 has a complex shape,

Note that the contact medium pressing jig may also have one of the structures described below.

### (Contact medium pressing jig)

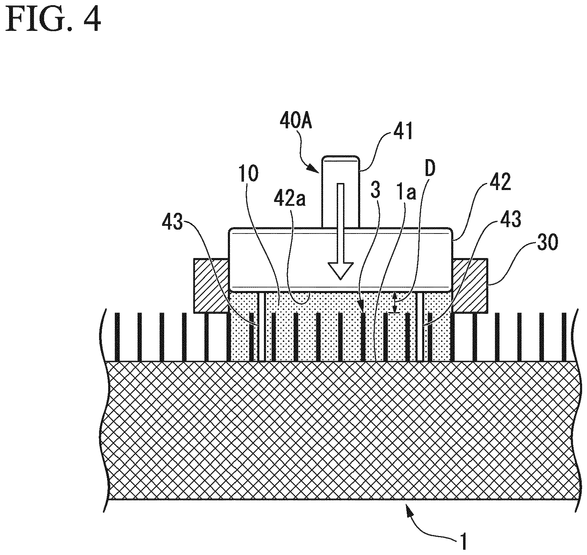

FIG. 4 is a structural diagram of a contact medium pressing jig 40A according to another embodiment of the present disclosure.

The contact medium pressing jig 40A shown in FIG. 4 is provided with spacers 43 that maintain the distance between the pressing surface 42a and the surface 1a of the inspection object 1 at a fixed distance. The spacers 43 are supported on the pressing portion 42. The spacers 43 are formed in a rod shape, and are provided protruding from the pressing surface 42a. The spacers 43 are formed longer than the honeycomb structural body 3. In consideration of providing stability when the contact medium pressing jig 40A performs a pressing action, it is preferable that three or more spacers 43 be provided. According to the contact medium pressing jig 40A, because the contact by the pressing portion 42 with the honeycomb structural body 3 is restricted as a result of the distal end of the spacers 43 being in contact with the surface 1a, the thickness D of the contact medium 10 can be reliably secured. As a consequence, work efficiency when pressing the contact medium 10 against the inspection object 1 is improved.

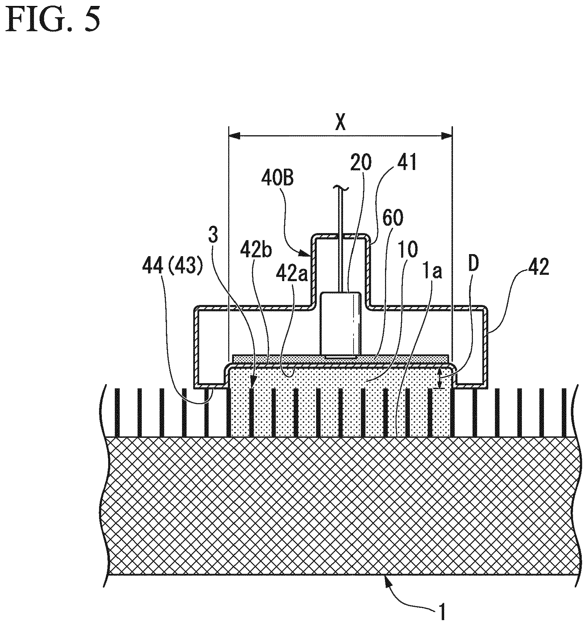

FIG. 5 is a structural diagram of a contact medium pressing jig 40B according to another embodiment of the present disclosure.

The contact medium pressing jig 40B shown in FIG. 5 is provided with a frame portion 44 that surrounds the inspection range X of the inspection object 1. The ultrasonic probe 20 is disposed, via a second contact medium 60, on a rear surface 42b which is on an opposite side to the pressing surface 42a. The frame portion 44 is formed integrally with the pressing portion 42. The frame portion 44 is formed in a toroidal shape, and protrudes from an outer edge portion of the pressing surface 42a. By being in contact with the honeycomb structural body 3, the frame portion 44 also performs the function of the spacer 43. The ultrasonic probe 20 is disposed in an interior portion of the hollow contact medium pressing jig 40B. The second contact medium 60 is coated onto the rear surface 42b which is on the opposite side to the pressing surface 42a. The second contact medium 60 may also be formed from the above-described polymer gel, or, alternatively, a normal, widely-used contact medium such as glycerin or the like. According to the contact medium pressing jig 40B, there is no need to provide the separate frame body 30, as is shown in FIG. 2A through FIG. 2C, when pressing the contact medium 10. As a consequence, work efficiency when pressing the contact medium 10 against the inspection object 1 is improved. Furthermore, according to this structure, a nondestructive inspection using the ultrasonic probe 20 which is disposed in the interior portion of the contact medium pressing jig 40B can be performed without lifting up the contact medium pressing jig 40B, so that the work efficiency of the nondestructive inspection is improved.

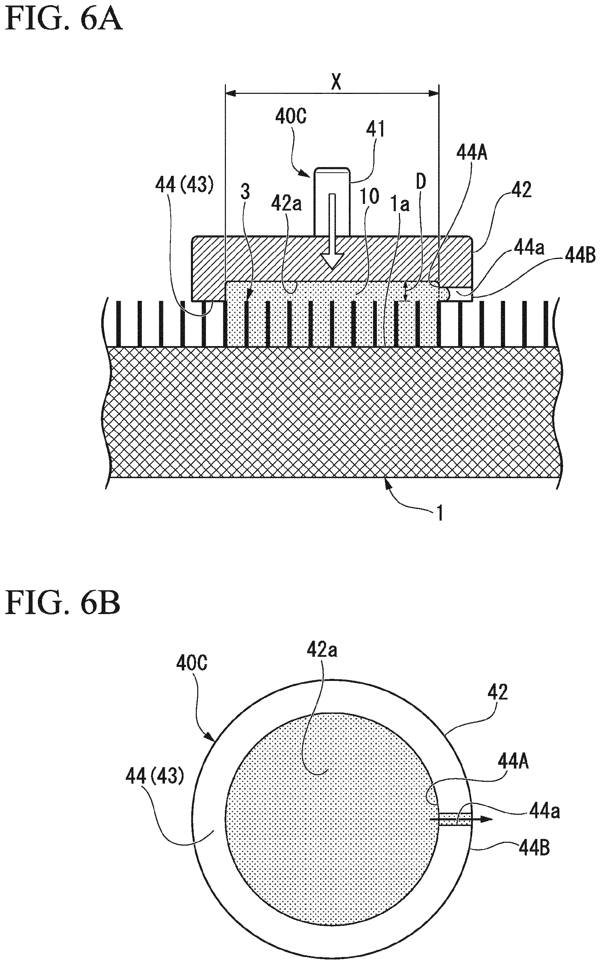

FIG. 6A and FIG. 6B are structural diagrams of a contact medium pressing jig 40C according to another embodiment of the present disclosure.

The contact medium pressing jig 40C shown in FIG. 6A and FIG. 6B is provided with a communicating portion 44a that enables an inner surface 44A of the frame portion 44 to communicate with an outer surface 44B thereof. As is shown in FIG, 6B, the frame portion 44 is formed in a toroidal shape on an outer side of the pressing surface 42a, and the communicating portion 44a is a groove that is formed in a straight line extending from the inner surface 44A to the outer surface 44B of the frame portion 44. Note that, instead of being formed as a groove, the communicating portion 44a may also be formed as a hole. As is shown in FIG. 6A, a part of the contact medium 10 that is being pressed by the contact medium pressing jig 40C is squeezed towards the outer surface 44B side through the communicating portion 44a. As a result, during a pressing operation, any excess contact medium 10 is prevented from leaking out from an unexpected location, so that the work efficiency when pressing the contact medium 10 against the inspection object 1 is improved. Note that a plurality of communicating portions 44a may be formed, however, because this allows air and the like to easily enter into the inspection range X, it is preferable that the number of communicating portions 44a be kept as low as possible.

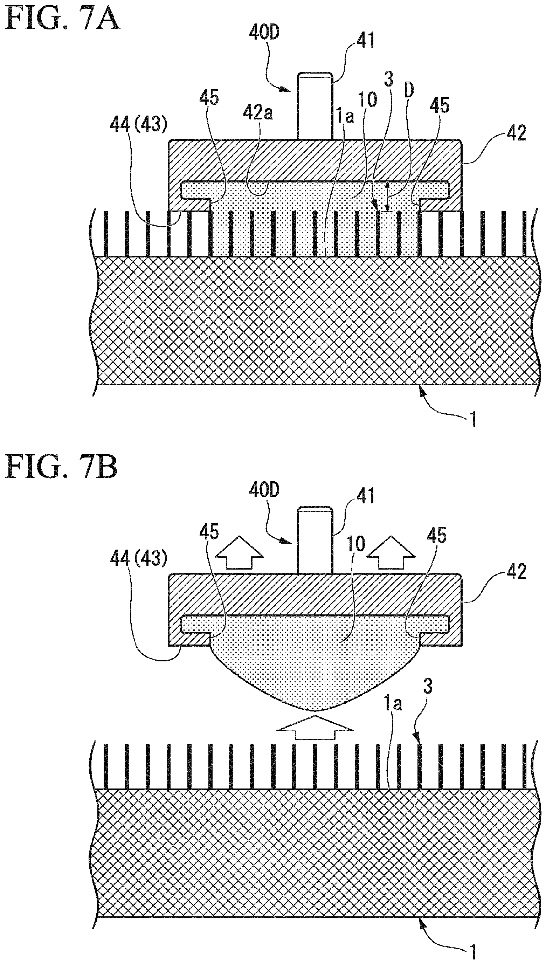

FIG. 7A and FIG. 7B are structural diagrams of a contact medium pressing jig 40D according to another embodiment of the present disclosure.

The contact medium pressing jig 40D shown in FIG. 7A and FIG. 7B is provided with a claw portion 45 that grasps the contact medium 10.

As is shown in FIG. 7A, the claw portion 45 is formed so as to protrude inwards from a distal end of the frame portion 44. The claw portion 45 may be formed a toroidal shape, or, alternatively, a plurality of claw portions 45 may be formed as projections at intervals in a circumferential direction. As a consequence, as is shown in FIG. 7B, the contact medium 10 can be separated from the inspection object 1 integrally with the contact medium pressing jig 40D. Because of this, the work efficiency when separating the contact medium 10 from the inspection object 1 is improved.

Embodiments of the present disclosure have been described above while referring to the drawings, however, it should be understood that the present disclosure is not limited to the above-described embodiments. The various shapes and combinations and the like of the respective component elements illustrated in the above-described embodiments are merely examples thereof, and various modifications may be made thereto based on design requirements and the like insofar as they do not depart from the spirit or scope of the present disclosure.

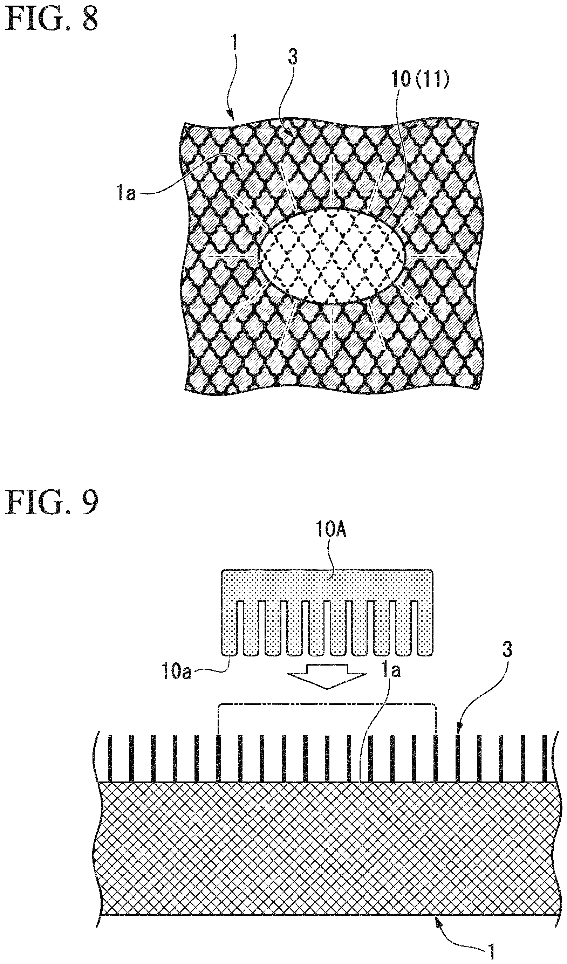

FIG. 8 is a plan view representing a contact medium 10 that is attached to an inspection object 1 in the nondestructive inspection method according to another embodiment of the present disclosure.

As is shown in FIG. 8, the contact medium 10 may contain a phosphorescent material 11. Zinc sulfide (ZnS-based), strontium aluminate (SrA1204-based) or the like may be used as the phosphorescent material 11. Because it is difficult for light to reach the interior of the fan case, work performed there takes place in a dark field. As the phosphorescent material 11 is contained in the contact medium 10, an operator is able to more easily view the contact medium 10. As a consequence, it becomes easy to confirm that the task of filling a space with the contact medium 10 has been performed properly, or to confirm whether any contact medium 10 is remaining during a separation operation.

FIG. 9 is a structural view of a contact medium 10A that is used in a nondestructive inspection method according to another embodiment of the present disclosure.

As is shown in FIG. 9, the contact medium 10A is formed in a shape that conforms to the shape of the honeycomb structural body 3. In other words, the contact medium 10A is provided with a plurality of protruding portions 10a that are inserted into the spaces in the honeycomb structural body 3. The protruding portions 10a are formed longer than the depth of the spaces in the honeycomb structural body 3, so that when the contact medium 10A is engaged with the inspection object 1 and is pressed against the inspection object 1, the protruding portions 10a are contracted in the long axial direction thereof and are placed in firm contact with the surface 1a. In addition, as the protruding portions 10a become fatter, the protruding portions 10a fill the spaces in the honeycomb structural body 3. In this manner, when the shape of the inspection object 1 is predetermined, by using contact medium 10A that has been molded to the shape of the inspection object 1, the engagement and the separation of the contact medium 10 can proceed efficiently. Moreover, if the molded contact medium 10A is used, then using the frame body 30 becomes unnecessary.

Furthermore, the methods and structures each of the above-described embodiments may be used in a variety of suitable combinations.

### Industrial Applicability

According to the present disclosure, even if an inspection object has a complex shape, it is possible to perform an on-site nondestructive inspection easily.

### Description of Reference Signs

- 1: Inspection object
- 1a: Surface
- 2: Composite material
- 3: Honeycomb structural body
- 10: Contact medium
- 10A: Contact medium
- 11: Phosphorescent material
- 20: Ultrasonic probe
- 30: Frame body
- 40: Contact medium pressing jig
- 40A: Contact medium pressing jig
- 40B: Contact medium pressing jig
- 40C: Contact medium pressing jig
- 40D: Contact medium pressing jig
- 42a: Pressing surface
- 42b: Rear surface
- 43: Spacer
- 44: Frame portion
- 44a: Communicating portion
- 44A: Inner surface
- 44B: Outer surface
- 60: Second contact medium
- X: Inspection range

## Claims

1. A nondestructive inspection method in which a contact medium is attached to an inspection object, and a nondestructive inspection of the inspection object is performed using an ultrasonic probe via the contact medium, wherein
a polymer gel in which high polymers are cross-linked is used as the contact medium, and
after the contact medium has been attached to the inspection object, and before the nondestructive inspection is performed, the contact medium is pressed against the inspection object.

2. The nondestructive inspection method according to claim 1, wherein:
a frame body is installed and surrounds an inspection range of the inspection object; and
a contact medium pressing jig is inserted on an inner side of the frame body, and presses the contact medium that has been disposed on the inner side of the frame body against the inspection object.

3. The nondestructive inspection method according to claim 1 or 2, wherein a honeycomb structural body is provided on a surface of the inspection object.

4. The nondestructive inspection method according to any one of claims 1 through 3, wherein the contact medium contains a phosphorescent material.

5. A contact medium pressing jig that is configured to press a contact medium against an inspection object, wherein
the contact medium pressing jig is provided with a pressing surface that is parallel to a surface of the inspection object.

6. The contact medium pressing jig according to claim 5, further comprising spacers that maintain the distance between the pressing surface and the surface of the inspection object at a fixed distance.

7. The contact medium pressing jig according to claim 5 or 6, further comprising a frame portion that surrounds an inspection range of the inspection object.

8. The contact medium pressing jig according to claim 7, wherein:
the pressing surface is formed on an inner side of the frame portion; and
the contact medium pressing jig further comprises a communicating portion that enables an inner surface and an outer surface of the frame portion to mutually communicate.

9. The contact medium pressing jig according to any one of claims 5 through 8, further comprising an ultrasonic probe that is disposed, via a second contact medium, on a rear surface that is on an opposite side to the pressing surface.
